(19) Europäisches Patentamt
European Patent Office
Office européen des brevets

(11) **EP 1 837 313 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(51) Int Cl.:
*C03C 10/12* (2006.01)   *C03C 3/095* (2006.01)

(21) Anmeldenummer: **06005594.4**

(22) Anmeldetag: **20.03.2006**

(54) **Optisch detektierbares floatbares arsen- und antimonfreies, keramisierbares Lithium-Aluminosilikat-Glas**

Optically detectable, floatable, arsenic- and antimony-free, ceramisable lithium-aluminium-silicate glass

Verre de lithium-aluminium-silicate, optiquement détectable, floatable et céramisable sans arsen et antimoine

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**26.09.2007 Patentblatt 2007/39**

(73) Patentinhaber: **Schott AG**
**55122 Mainz (DE)**

(72) Erfinder:
- **Siebers, Friedrich, Dr.**
**55283 Nierstein (DE)**
- **Beudt, Hans-Werner**
**65187 Wiesbaden (DE)**
- **Rüdinger, Bernd, Dr.**
**55286 Wörrstadt (DE)**
- **Lautenschläger, Gerhard, Dr.**
**07743 Jena (DE)**
- **Schneider, Klaus**
**99150 Apolda (DE)**
- **Jacquorie, Michael, Dr.**
**55494 Rheinböllen (DE)**
- **Schmidbauer, Wolfgang, Dr.**
**55126 Mainz-Finthen (DE)**

(74) Vertreter: **Fuchs**
**Patentanwälte**
**Postfach 46 60**
**65036 Wiesbaden (DE)**

(56) Entgegenhaltungen:
DE-A1- 10 017 701       GB-A- 1 562 332
US-A- 4 093 468         US-A1- 2005 250 639

**Beschreibung**

Die Erfindung betrifft ein optisch detektierbares floatbares arsen- und antimonfreies keramisierbares Lithium-Aluminiumsilikatglas, das vorspannbar ist und die daraus umgewandelte Glaskeramik.

Aufgrund ihrer hervorragenden thermischen Eigenschaften finden Scheiben aus Glaskeramik bzw. ihrem Vorläuferglas vielfach Verwendung u.a. für Kochfelder, Backofenscheiben, Kaminscheiben und für Brandschutzverglasungen. Für viele Anwendungen der Gläser werden die Scheiben zwecks Erhöhung der Festigkeit als Sicherheitsgläser oder zum Personenschutz thermisch oder chemisch vorgespannt.

Zur Erzielung einer hohen optischen Qualität werden diese Gläser nach dem Floatverfahren hergestellt. Transparente Scheiben sind dann visuell praktisch nicht mehr von Fensterglas (Kalk-Natron-Glas) zu unterscheiden. Auch gestattet das Floaten die Herstellung von Flachgläsem mit größeren Abmessungen als andere Formgebungsverfahren, da beim Floaten Bandbreiten oberhalb 2m bis zu ca. 5m üblich sind. Ein solches Glas ist z.B. in DE 100 17 01 C2 und der korrespondierenden US 6,846,760 B2 beschrieben.

Werden solche Gläser oder Glaskeramik zusammen mit normalem Flachglas rezykliert, so treten bei größerem Anteil in den angelieferten Scherben erhebliche Probleme in den üblichen Natron-Kalk-Glas erzeugenden Glashütten auf, da sich Glaskeramik und ihr Vorläuferglas bei den in den Natron-Kalk-Schmelzwannen herrschenden Schmelzbedingungen nur sehr langsam auflösen und bei größerem Mengenanfall die Funktion der Schmelzwanne und der Formgebung beeinträchtigen.

Glaskeramik und deren Vorläufergläser, die nach dem Floatverfahren hergestellt werden sollen, müssen arsen- und antimonfrei geläutert werden. Unter Einwirkung der reduzierenden Bedingungen beim Floaten werden nämlich die genannten Läutermittel unmittelbar an der Glasoberfläche reduziert und bilden störende und visuell auffällig metallische Beläge. Die Entfernung dieser für die Anwendung störenden und toxikologisch bedenklichen Beläge durch Schleifen und Polieren ist aus wirtschaftlichen Gründen unvorteilhaft. Weiterhin ist die Verwendung von $As_2O_3$ und $Sb_2O_3$ auch unter Sicherheits- und Umweltschutzaspekten nachteilig, weil bei der Rohstoffgewinnung und Aufbereitung und wegen der Verdampfung bei der Schmelze, sowie bei Nachverarbeitungsprozessen und bei Recycling und Deponierung besondere Vorsichtsmaßnahmen ergriffen werden müssen.

Neben der sehr aufwendigen rein physikalisch wirkenden Unterdruckläuterung erfolgt die arsen- und antimonfreie Läuterung üblicherweise chemisch und zwar vorzugsweise unter Verwendung von Zinn-Verbindungen. Diese Zinn-Läuterung hat jedoch den Nachteil, dass insbesondere bei der Keramisierung ein störender Sn/Ti-Farbkomplex auftritt, der im kurz- bis mittelwelligen Teil des sichtbaren Lichts absorbiert. Dieser Farbkomplex stört zwar im gefloateten Ausgangsglas nur bei hohen Qualitätsansprüchen, er verstärkt sich aber beim Keramisieren deutlich und führt zu einer deutlich wahrnehmbaren gelbbraunen Färbung.

Dem Glas-Recycling wird aus wirtschaftlichen und umweltschutzpolitischen Gründen in Zukunft eine immer größere Bedeutung zukommen. Für ein möglichst wirtschaftliches Recycling von Altscherben werden zunehmend optische Verfahren eingesetzt, die die Scherben aufgrund ihrer unterschiedlichen Absorptionsbanden trennen. Dabei werden z.B. die Scherben auf einem Fließband durch eine Lichtschranke transportiert, wobei die von dem jeweiligen Scherben emittierte oder absorbierte Lichtwellenfrequenz detektiert wird und der Scherben im allgemeinen pneumatisch je nach der detektierten Frequenz in entsprechende Sammelbehälter geblasen wird.

Die Aufgabe der Erfindung besteht darin, eine Glaskeramik bzw. ihr Vorläuferglas, die im Zusammensetzungsbereich der eingangs genannten DE 100 177 01 C2 bzw. US 6,846,760 liegen, so weiter zu entwickeln, dass sie in einer Scherbensortieranlage durch optische Verfahren detektierbar sind und die aufgrund der Bildung des Sn/Ti-Komplexes beruhende gelbbraune Färbung verringert oder ganz unterdrückt werden kann.

Diese Aufgabe wird durch das in Patentanspruch 1 beschriebene Glas bzw. die Glaskeramik gelöst.

Das erfindungsgemäße optisch detektierbare floatbare arsen- und antimonfreie keramisierbare Glas, das vorspannbar ist, und die daraus umgewandelte Glaskeramik haben eine Zusammensetzung (in Gew.% auf Oxidbasis) von

| | |
|---|---|
| $SiO_2$ | 55-69 |
| $Al_2O_3$ | 19-25 |
| $Li_2O$ | 3,2-5 |
| $Na_2O$ | 0-1,5 |
| $K_2O$ | 0-1,5 |
| MgO | 0-2,2 |
| CaO | 2,0 |
| SrO | 2,0 |
| BaO | 0-2,5 |
| ZnO | 0-< 1,5 |

(fortgesetzt)

| | |
|---|---|
| TiO$_2$ | 1-3 |
| ZrO$_2$ | 1-2,5 |
| SnO$_2$ | 0,1- < 1 |
| ΣTiO$_2$+ZrO$_2$+SnO$_2$ | 2,5-5 |
| P$_2$O$_5$ | 0-3 |
| Nd$_2$O$_3$ | 0,01-0,6 |
| CoO | 0-0,005 |
| F | 0-1 |
| B$_2$O$_3$ | 0-2 |

Bei dem erfindungsgemäßen gefloateten, vorspannbaren oder in eine transparente farbarme Glaskeramik mit Hochquarz-Mischkristallen oder Keatit-Mischkristallen als Hauptkristallphase umwandelbaren Flachglas wird die störende auf Sn/Ti-Farbkomplexen beruhende Eigenfarbe durch Zusätze von Verbindungen des Nd in Gehalten von 100 bis 6000 ppm verringert. Der Nd-Gehalt ist in diesen Angaben umgerechnet auf Oxidbasis (Nd$_2$O$_3$), wobei die Art des Nd-Zusatzes im Gemenge nicht auf das angegebene Oxid beschränkt ist, sondern beliebige Nd-Verbindungen zugesetzt werden können.

Untersuchungen haben gezeigt, dass sich das Nd als Markierungs- und Überfärbemittel im Floatprozess weitgehend inert verhält. Die Auswahl des Nd ist vorteilhaft, weil sich das Nd mit seiner stabilen Wertigkeit als dreiwertiges Ion nicht durch die reduzierende Einwirkung der Floatatmosphäre aus Formiergas oder des flüssigen Sn reduzieren lässt. Eine solche Reduktion ist üblicherweise mit Oberflächendefekten beim Floaten verbunden.

Zusätze von Co in einer Gesamtmenge bis zu 50 ppm (umgerechnet auf CoO) zum Nd-Zusatz sind vorteilhaft, um den Farbpunkt des gefloateten Flachglases oder der daraus hergestellten transparenten Glaskeramik noch genauer in Richtung Unbuntpunkt einzustellen. Der Nd-Zusatz allein verschiebt den Farbpunkt nicht exakt in Richtung Unbuntpunkt, so dass diese leichte Korrektur vorteilhaft sein kann. In diesen geringen Gehalten haben sich die genannten Zusätze als nicht störend im Floatprozess erwiesen. Neben Co können auch andere Färbemittel wie z.B. Ni, V, Cr, Mn, Cu, Ce, Se oder Seltenerd-Ionen zusätzlich in geringen Gehalten eingesetzt werden, um den Farbton einzustellen.

Die Zusätze von Nd haben den Vorteil, dass dieses Element zusätzlich auch der Färbung durch Fe/Ti-Komplexe, wie an sich aus US 4 093 468 bekannt, gut entgegenwirkt, die eine ähnliche Farbe wie der Sn/Ti-Komplex erzeugen.

Der Farbpunkt gemessen im CIE-Farbsystem oder im Lab-Farbsystem wird durch Nd recht gut in Richtung des Unbuntpunktes verschoben. Weiterhin verfügt das Nd als färbendes Ion aus der 4f-Gruppe des Periodensystems über sehr viele charakteristische Absorptionsbanden, die eine eindeutige Markierung ermöglichen. Bei der Umwandlung des gefloateten Flachglases in die transparente Glaskeramik werden diese Absorptionslinien nur wenig verändert, während die Absorptionsbanden z.B. des Co und Ni merklich verändert werden. Dies liegt darin begründet, dass die färbenden Ionen der 3d-Elementgruppe des Periodensystems mit ihren Absorptionsbanden stärker durch die Kristallfeld-Umgebung beeinflusst werden. Die Änderung der Kristallfeld-Umgebung geschieht bei der Keramisierung dadurch, dass Co und Ni in den Hochquarz-Mischkristall eingebaut werden.

Die Oxide Li$_2$O, Al$_2$O$_3$ und SiO$_2$ sind in den angegebenen Grenzen notwendige Komponenten für die chemische Vorspannbarkeit des gefloateten Flachglases und für die Umwandlung in die Glaskeramiken mit Hochquarz- und/oder Keatit-Mischkristallphasen. Li$_2$O-Gehalte von über 5 Gew.% führen beim Herstellprozess zu einer ungewollten Entglasung. Als weitere Komponenten können MgO, ZnO und P$_2$O$_5$ in die Kristallphasen eingebaut werden. Der ZnO-Gehalt ist wegen der Problematik der Bildung von Glasfehlern beim Floaten begrenzt. Der MgO-Gehalt ist auf maximal 2,2 Gew.% bevorzugt auf 0,1 bis 2,0 Gew.% begrenzt, weil er sonst den Ausdehnungskoeffizienten der Glaskeramik unzulässigerweise erhöht. Zur Vermeidung hoher Viskositäten des Glases und der Neigung zu unerwünschter Kiristallisation von Mullit ist der Al$_2$O$_2$-Gehalt auf maximal 25 Gew.% bevorzugt 24 Gew. % begrenzt. Der SiO$_2$Gehalt soll maximal 69 Gew.% bevorzugt 68 Gew.% betragen, weil diese Komponente die Viskosität des Glases stark erhöht. Somit sind für das Einschmelzen der Gläser und hinsichtlich der Temperaturbelastung des Floatteiles bei der Formgebung höhere Gehalte von SiO$_2$ unvorteilhaft. Die Zugabe der Alkalien Na$_2$O, K$_2$O, der Erdalkalien CaO, SrO, BaO, sowie von F und B$_2$O$_3$ verbessert die Schmelzbarkeit und das Entglasungsverhalten des Glases beim Floaten. Die Gehalte sind jedoch begrenzt, weil diese Komponenten im wesentlichen in der Restglasphase de Glaskeramik verbleiben und die thermische Ausdehnung in unzulässiger Weise erhöhen, wodurch sich die Temperaturbelastbarkeit der Glaskeramik verschlechtert. Auch können höhere Gehalte das Kristallisationsverhalten bei der Umwandlung des gefloateten Flachglases in die Glaskeramik beeinträchtigen. Die Summe der Alkalien Na$_2$O+K$_2$O soll bevorzugt 0,1 bis 2 Gew.%, vorzugsweise 0,2 bis 2 Gew.%, insbesondere 0,4 bis 1,5 Gew.% betragen. Die Zugabe von P$_2$O$_5$ kann bis zu 3 Gew.% betragen und ist bevorzugt auf 2 Gew.% begrenzt. Die Zugabe von P$_2$O$_5$ ist günstig für die Entglasungsfestigkeit beim Floaten, höhere Gehalte wirken sich allerdings ungünstig auf die Säurebeständigkeit aus. Die Gehalte der keimbildenden Komponenten

TiO$_2$, ZrO$_2$, SnO$_2$ sind in relativ engen Grenzen zu kontrollieren. Auf der einen Seite sind in der Summe Mindestgehalte von 2,5 Gew.% bevorzugt mindestens 3 Gew.% erforderlich, um während der Keimbildung Keime in hoher Dichte zu erzeugen, damit nach dem Aufwachsen der Hochquarz-Mischkristalle transparente Glaskeramiken realisierbar sind. Durch die hohe Keimdichte bleibt die mittlere Kristallitgröße der Hochquarz-Mischkristalle auf Werte <100 nm begrenzt, wodurch eine störende Lichtstreuung vermieden wird. Höhere Keimbildner-Gehalte als 5 Gew.% führen jedoch unter den Zeit/Temperaturbedingungen des Floatens bereits zu störenden Oberflächenkristallen im Kontakt zwischen Glas und Zinnbad. Bevorzugt ist ein Keimbildnergehalt von maximal 4,5 Gew.%. Für eine effektive Keimbildung ist in jedem Fall ein Mindestgehalt TiO$_2$ von 1 Gew.% erforderlich. Der TiO$_2$-Gehalt soll maximal 3,0 Gew.% bevorzugt bis zu 2,6 Gew.% betragen, weil diese Komponente an der Bildung der für die Eigenfarbe störenden Fe/Ti- und Sn/Ti-Farbkomplexe beteiligt ist. Die Gehalte an Nd sind notwendig, um das erfindungsgemäße Ziel einer Verringerung der Eigenfarbe der gefloateten Flachgläser und der daraus hergestellten transparenten Glaskeramiken durch Überfärbung zu erreichen. Weiterhin dienen sie dazu, die erfindungsgemäßen Flachgläser und die daraus hergestellten Glaskeramiken eindeutig zu markieren und die Recyclingfähigkeit zu verbessern. Zusätze von Co gestatten es den Farbort noch genauer in die Nähe des Unbuntpunktes einzustellen.

Die Entstehung störender Oberflächendefekte beim Floaten von LAS-Gläsern wird in an sich bekannter Weise durch die Begrenzung der Gehalte von Pt auf kleiner 300 ppb, Rh auf kleiner 30 ppb und ZnO auf kleiner 1,5 Gew.%, sowie SnO$_2$ auf kleiner 1 Gew.% vermieden. Wenn das Glas mehr als 300 ppb Pt oder mehr als 30 ppb Rh in gelöster Form erhält, können sich durch die reduzierenden Bedingungen der Floatatmosphäre in der Nähe der Glasoberfläche metallische Ausscheidungen von Pt bzw. Rh-Partikeln bilden. Diese wirken als Keime für große bis zu 150 $\mu$m große Hochquarz-Mischkristalle und bewirken so eine störende Oberflächenkristallisation. Diese Edelmetalle, die bei Floatanlagen, insbesondere als Elektroden, Auskleidung, Rührer, Transportrohre, Schieber usw. im Schmelz- oder Floatteil Verwendung finden, werden daher auf Anlagen zur Herstellung des erfindungsgemäßen Flachglases weitgehend vermieden und durch keramische Materialien ersetzt bzw. die Konstruktion wird so ausgebildet, dass die genannten Gehalte nicht überschritten werden.

Der ZnO-Gehalt ist auf 1,5 Gew.%, bevorzugt auf höchstens 1 Gew.% begrenzt. Es hat sich gezeigt, dass unter den reduzierenden Bedingungen des Floatens das Zink in der Oberfläche des Glases teilweise reduziert wird, und dadurch aufgrund des höheren Dampfdruckes von Zn$^0$ gegenüber dem Zn$^{2+}$ in der Floatatmosphäre verdampft. Neben der für den Betrieb der Floatanlage unerwünschten Verdampfung und der Abscheidung des Zn an kälteren Stellen, ist die ungleichmäßige Verteilung des Zn im gefloateten Flachglas nachteilig. Das Zn ist an der Oberseite des gefloateten Flachglases, die der Floatatmosphäre ausgesetzt ist, verarmt gegenüber der Unterseite des gefloateten Flachglases, die im Kontakt mit dem Sn-Bad ist. Diese Ungleichverteilung des Zn-Gehaltes führt zu unterschiedlichen Verhalten von Ober- und Unterseite des gefloateten Flachglases, z.B. bei Nachverarbeitungsprozessen, wie Beschichten, Vorspannen und ist auch beim Keramisieren nachteilig. Im Zusammenspiel mit anderen polyvalenten Glaskomponenten kann das Zn zu störenden Oberflächendefekten, wie z.B. einem Kristallband führen. Dieses Kristallband entsteht im Zusammenspiel mit dem reduzierenden Einfluss der Floatatmosphäre auf polyvalente Glaskomponenten, hier insbesondere die teilweise Reduktion des Ti$^{4+}$ zu Ti$^{3+}$. Da sowohl Zn als auch Ti an der Entstehung des Kristallbandes beteiligt sind, hat sich gezeigt, dass ihre Gehalte bevorzugt der Bedingung genügen sollen in Gew.%: 3,2 x ZnO + TiO$_2$ $\leq$ 4,3. Auch verstärkt der ZnO-Gehalt die Ausbildung von Kügelchen aus metallischen Sn, bzw. einer Sn/Zn-Legierung im Glas an der Floatoberseite des Glases. Es ist daher zweckmäßig, den Ausgangswert des ZnO im Glas von Anfang an klein zu halten.

Der SnO$_2$ Gehalt in dem Glas soll 0,1 bis unter 1 Gew.%, bevorzugt 0,2 bis 0,6 Gew.% betragen. SnO$_2$ ist für die Läuterung des verhältnismäßig hoch schmelzenden Glases erforderlich. Die Begrenzung des SnO$_2$-Gehaltes auf weniger als 1 Gew.% dient der Verbesserung der Entglasungsfestigkeit der Glasschmelze. Höhere Gehalte an SnO$_2$ können dazu führen, dass im Bereich der Formgebung, d.h. bei Viskositäten bei der Verarbeitungstemperatur des Glases von 10$^4$ dPas, unerwünschte Sn-haltige Kristallphasen entstehen. Bevorzugt soll die obere Entglasungsgrenze (OEG) unter der Verarbeitungstemperatur V$_A$ liegen. Auch wird durch höhere SnO$_2$-Gehalte der korrosive Angriff der Glasschmelze auf Einbauten aus Pt bzw. Pt/Rh verstärkt und kann deren Gehalte über die kritischen Grenzwerte erhöhen. Ein weiterer, durch höhere SnO$_2$-Gehalte bedingter Glasfehler ist die Bildung von Kügelchen ("hole defects") aus metallischem Sn im Glas an der Floatoberseite, die der reduzierenden Floatatmosphäre ausgesetzt ist. Diese Kügelchen haben eine Größe von ca. 100 nm und lassen sich beim Abkühlen oder Reinigen teilweise entfernen, lassen jedoch kugelförmige Löcher in der Glasoberfläche zurück, die für die Anwendung störend sind.

Die erfindungsgemäßen Gläser werden ohne Verwendung der für Gläser aus dem Li$_2$O-Al$_2$O$_3$-SiO$_2$-System üblichen Läutermittel Arsen- und/oder Antimonoxid geläutert und sind somit technisch frei von diesen unter Sicherheits- und Umweltschutz-Aspekten nachteiligen Komponenten. Sofern diese Komponenten als Verunreinigungen vorliegen sollten, muss ihr Gehalt auf weniger als ca. 400 ppm begrenzt werden. Bei höheren Gehalten werden die genannten Läutermittel unter der Einwirkung der reduzierenden Bedingungen beim Floaten nämlich unmittelbar unter der Oberfläche reduziert, bilden störende und visuell auffällige Beläge. Die Entfernung dieser für die Anwendung störenden und toxikologisch bedenklichen Beläge durch Schleifen und Polieren ist aus wirtschaftlichen Gründen unvorteilhaft.

Neben den zur Läuterung eingesetzten Zinnverbindungen können zusätzlich noch weitere chemische Läutermittel wie Sulfat-, Chlorid- und Fluoridverbindungen erforderlichenfalls eingesetzt werden.

Bei besonders hohen Anforderungen an die Blasenqualität kann es notwendig werden, chemische Läuterung und physikalische Läuterverfahren zu kombinieren. Die Kombination des Läutermittels $SnO_2$ mit einer Hochtemperaturläuterung <1700°C hat sich als besonders vorteilhaft erwiesen, um niedrige Blasenzahlen von kleiner 10 Blasen/kg Glas (bezogen auf Blasengrößen oberhalb 0,1 mm) mit vergleichsweise niedrigen $SnO_2$-Gehalten zu erreichen. Dies gilt, weil $SnO_2$ den zur Läuterung benötigten Sauerstoff bei vergleichsweise hohen Temperaturen abspaltet.

Besonders geeignet ist ein Glas bzw. eine Glaszusammensetzung, die im wesentlichen die nachstehende Zusammensetzung (in Gew.% auf Oxidbasis) hat:

$SiO_2$ 60-68, $Al_2O_3$ 19-24, $Li_2O$ 3,5-4,5, $Na_2O$ 0,2 -1, $K_2O$ 0-0,8,
$\Sigma$ $Na_2O+K_2O$ 0,4-1,5, MgO 0,1-2, CaO 0-1,5, insbesondere 0-1, SrO
0-1,5, insbesondere 0-1, BaO 0-2,5, ZnO 0-1, $TiO_2$ 1-2,6, $ZrO_2$ 1,2-2,2,
$SnO_2$ 0,2-0,6, $\Sigma$ $TiO_2+ZrO_2+SnO_2$ 3-4,5, $P_2O_5$ 0-2, $B_2O_3$ 0-2, insbesondere 0-1 $Nd_2O_3$ 0,025-0,46, CoO 0-0,003.

Der Wasssergehalt der erfindungsgemäßen Gläser liegt abhängig von der Wahl der Gemengerohstoffe und von den Prozessbedingungen bei der Schmelze üblicherweise zwischen 0,015 und 0,06 mol/l. Dies entspricht $\beta_{OH}$-Werten von 0,16 bis 0,64 $mm^{-1}$.

Das Glas kann aufgrund seines $Li_2O$-Gehaltes auch chemisch vorgespannt werden. Es ist dabei von Vorteil, wenn der Gehalt an $Li_2O+Na_2O$ mehr als 3,7 Gew.% beträgt, da dann durch Ionenaustausch mit $Na_2O$ und/oder $K_2O$ sehr hohe Druckspannungen in der Glasoberfläche erzeugt werden können.

Für Anwendungen des gefloateten Lithium-Aluminosilikat-Flachglases, bei denen eine hohe Lichttransmission gewünscht ist, ist es vorteilhaft, den Gehalt an $Fe_2O_3$ auf weniger als 250 ppm, den $TiO_2$-Gehalt auf 2,3 Gew.%, den Gehalt von $Nd_2O_3$ auf 4000 ppm und den CoO-Gehalt auf weniger als 30 ppm zu begrenzen. Mit diesen Begrenzungen kann eine geringe Eigenfarbe im glasigen Zustand bei 4 mm Dicke mit einer Buntheit (Chromatizität) im CIELAB-System (oder kurz Lab-System) C* von < 3 in Verbindung mit einer Lichttransmission von > 85% erreicht werden. Für die meisten Fälle ist ein $Nd_2O_3$-Gehalt von 100 bis 3000 ppm, insbesondere 100-2000 ppm ausreichend und wird bevorzugt.

Die für die chemischen Läutermittel Arsen- und/oder Antimonoxid geltende Umweltproblematik trifft, wenn auch in geringerem Maße, auf das Bariumoxid zu. Bariumhaltige Rohstoffe, insbesondere wenn sie wasserlöslich sind, wie Bariumchlorid und Bariumnitrat, sind toxisch und erfordern besondere Vorsichtsmaßnahmen beim Einsatz. In den erfindungsgemäßen gefloateten Lithium-Aluminosilikat-Flachgläsem ist es deshalb vorteilhaft, auf den Zusatz von BaO bis auf technisch unvermeidbare Spuren zu verzichten.

Das erfindungsgemäße gefloatete Flachglas ist typischerweise gekennzeichnet durch einen thermischen Ausdehnungskoeffizienten $\alpha_{20/300}$ zwischen 3,5 und $5,5\cdot10^{-6}$/K. Dies ist günstig für die thermische Vorspannbarkeit. Liegt der thermische Ausdehnungskoeffizient unter $3,5\cdot10^{-6}$/K, so ist schwierig mit herkömmlichen Luft-Vorspannanlagen eine für den Krümelbruch nach DIN 1249 ausreichende Druckspannung zu erreichen. Zum Erreichen einer hohen Temperaturunterschiedsfestigkeit soll der thermische Ausdehnungskoeffizient $\alpha_{20/300}$ nicht mehr als $5,5\cdot10^{-6}$/K betragen. Die Transformationstemperatur Tg des Flachglases soll zwischen 600 und 750°C liegen. Solche im Vergleich zu üblichen Kalk-Natrongläsem und auch Borosilikatgläsem hohen Transformationstemperaturen sind günstig für das Erreichen einer hohen Druckvorspannung und damit einer hohen Temperaturunterschiedsfestigkeit. Die Transformationstemperatur soll 750°C nicht überschreiten, da sonst technisch wesentlich aufwendigere Luftvorspannanlagen benötigt werden. Außerdem besteht die Gefahr, dass die Brandschutzverglasung im Brandfall durch den sich verziehenden Stahlrahmen zerstört wird, da das Glas für den Abbau thermischer Spannung noch nicht weich genug ist. Die Verarbeitungstemperatur $V_A$ liegt unter 1350°C, um die Einschmelzbarkeit des Glases zu begünstigen und um die thermische Belastung des Floatbades und die Verdampfung von Glaskomponenten bei hohen Temperaturen zu begrenzen.

Nach Umwandlung in die transparente, farbarme Glaskeramik mit Hochquarz-Mischkristallen als Hauptkristallphase soll der thermische Ausdehnungskoeffizient $\alpha_{20/700}$ nicht mehr als $0,5\cdot10^{-6}$/K von der Nullausdehnung abweichen. Bevorzugt soll die Abweichung weniger als $0,3\cdot10^{-6}$/K betragen. Mit den niedrigen thermischen Ausdehnungskoeffizienten wird eine hohe Temperaturbelastbarkeit und Temperaturunterschiedsfestigkeit der Glaskeramik erreicht.

Durch den Zusatz von $Nd_2O_3$ und ggf. CoO lässt sich eine geringe Eigenfarbe erreichen mit einem Yellowness-Index von kleiner als 15% und einer Buntheit C* von kleiner 10, gemessen in Transmission bei 4 mm Dicke. Die Messung des Yellowness-Index geschieht bei Normlicht C, 2° gemäß der Norm ASTM 19257/70 (77, 85). Die Buntheit (Chromatizität) im Lab-System C* ist definiert durch $C^* = \sqrt{a^{*2}+b^{*2}}$, wobei a* und b* die Farbkoordinaten in diesem System sind. Die Farbkoordinaten L*, a*, b* aus dem CIELAB-Systen (oder kurz Lab-System) lassen sich in bekannter Weise in Farbkoordinaten anderer Farbsysteme z.B. in das CIE-System mit den Farbkoordinaten x y und Helligkeit Y umrechnen.

Bevorzugt werden die Zusätze von Nd und optional Co so gewählt, dass die Eigenfarbe, gemessen bei 4 mm Dicke einen Yellowness-Index von <10% und eine Buntheit C* kleiner 7 erreicht.

Das Prinzip des Überfärbens eines vorhandenen unerwünschten Farbstichs durch ein Färbmittel mit komplementären Absorptionsbanden führt naturgemäß zu einer stärkeren Absorption des Lichts und erniedrigt damit die Lichttransmission. Für das Erreichen hoher Lichttransmission ist es wünschenswert, die durch Fe, Ti, Sn-Ionen verursachte Eigenfarbe gering zu halten, damit man mit geringen Konzentrationen von Überfärbmittel auskommt.

Für Anwendungen der farbarmen, transparenten Glaskeramiken, z.B. für den Einsatz als Kaminsichtscheiben oder als Brandschutzverglasung, sollen die Gehalte $TiO_2$ <2,3 Gew.%, $SnO_2$ <0,5 Gew.%, $Fe_2O_3$ < 200 ppm, $Nd_2O_3$ >4000 ppm und Co<30ppm betragen, damit bei 4 mm Dicke eine Lichttransmission von >80% erreicht werden kann, verbunden mit einem Yellowness-Index kleiner 15% und einer Buntheit C* kleiner 10.

Bei Umwandlung in die Glaskeramik mit Keatit-Mischkristallen als Hauptkristallphase soll der thermische Ausdehnungskoeffizient $a_{20/700}$ weniger als $1,5 \cdot 10^{-6}$/K betragen. Solche Glaskeramiken können je nach Zusammensetzung in transparenter, weiß transluzenter oder weißopaker Form vorliegen. Bei Verwendung von Farboxiden wird der Weißton entsprechend überfärbt.

Wenn eine Beschichtung des Flachglases gewünscht ist, ist es wirtschaftlich vorteilhaft, die Restwärme des Glases aus dem Formgebungsprozess auszunutzen und diese Beschichtung im Floatteil und/oder im Kühlofen vor Abkühlung des Glases vorzunehmen. Auf diese Weise können eine oder mehrere Schichten z.B. aus $SiO_2$, $TiO_2$, $SnO_2$, $Al_2O_3$, $WO_3$, $VO_2$ oder leitfähige Indium/Zinnoxid-Schichten aufgebracht werden.

Vorzugsweise findet das erfindungsgemäße gefloatete Flachglas nach thermischem oder chemischem Vorspannen Verwendung als Sicherheitsglas, als Brandschutzverglasung oder als Sichtscheibe bei Anwendungen mit hohen Anforderungen an die Temperaturbelastbarkeit, die von Kalknatron- oder von Borosilikatgläsern nicht erreicht werden. Als vorgespanntes Brandschutzglas besitzt das Sicherheitsglas Eigenschaften gemäß DIN 1249 (Krümelbruch).

Nach Umwandlung in eine Glaskeramik mit Hochquarz-Mischkristallen oder Keatit-Mischkristallen findet diese in transparenter, farbarmer Form bevorzugt Verwendung als Brandschutzglas, Kaminsichtscheibe, Backofenschichtscheibe, insbesondere für Pyrolyseherde, Abdeckungen von Leuchten hoher Energie. Durch Aufbringen einer lichtabsorbierenden Unterseitenbeschichtung lässt sich aus der transparenten Glaskeramik eine Kochfläche mit der geforderten Lichttransmission herstellen. Nach Umwandlung in eine Glaskeramik mit Keatit-Mischkristallen als Hauptkristallphase findet die erfindungsgemäße Glaskeramik in transluzenter oder opaker Form bevorzugt Verwendung als Kochfläche oder als Abdeckplatte in Mikrowellenherden. Auch Scheiben oder Verglasungen z.B. im Brandschutzbereich, die keine Durchsicht erlauben sollen, können mit dieser Glaskeramik vorteilhaft bedient werden.

Durch die hohe Oberflächenqualität des Floatprozesses ergeben sich bei den gefloateten Flachgläsern und den daraus hergestellten Glaskeramiken ästhetische Vorteile. Störende Lichtreflexe bei der Aufsicht und Verzerrung bei der Durchsicht werden vermieden. Die Verwendung z.B. als transparente, farbarme Glaskeramik für die Brandschutzverglasung ist möglich, ohne dass eine kostspielige Politur der Oberfläche erfolgen muss. Dieser Vorteil kommt insbesondere bei Verwendung als Sichtscheibe in den verschiedenen Anwendungen zum Tragen. Bei der Verwendung z.B. als Kaminsichtscheibe, Backofenscheibe oder im Beleuchtungssektor, sowie bei Verglasungen ist die Floatoberfläche wesentlich unempfindlicher gegenüber dem anhaften von Verschmutzung und lässt sich leichter reinigen als z.B. eine über Walzformgebung hergestellte Oberfläche mit ihrer Mikrorauhigkeit. Auch stellt der Floatprozess Flachgläser mit größeren Abmessungen als z.B. der Walzprozess zur Verfügung, da die Glasbandbreite beim Floaten ca. 2-5 m betragen kann.

Die mit der Erfindung erzielbaren Vorteile liegen neben einer Unterdrückung der braungelb-Färbung durch den Sn/Ti- bzw. Fe/Ti-Komplex vor allem in der Möglichkeit, Scherben mit der beanspruchten Zusammensetzung einfach detektieren zu können.

Die charakteristischen Absorptionslinien des Nd ermöglichen eine Erkennung und Trennung in Aufbereitungsprozessen beim Recycling von Altscherben aus Kalk-Natron-Glas. Besonders vorteilhaft ist der Zusatz von Nd zur Markierung wegen der charakteristischen Absorptionslinien und seiner Eigenschaft im Infraroten zu fluoreszieren. Ein weiterer Vorteil des Nd besteht darin, dass sich die Absorptionslinien auch bei Keramisierung des Glases kaum verschieben.

Durch die genannten Eigenschaften kann vermieden werden, dass Scherben aus (vorgespannten) Flachgläsern oder transparenter Glaskeramik, die wegen der geringen Eigenfarbe leicht z.B. mit normalen Fensterscheiben aus niedrigschmelzenden Kalk-NatronGläsern verwechselt werden können, in deren Aufbereitungsprozess und Wiedereinschmelzen gelangen.

Weiterhin lässt sich der Gehalt an Nd sehr einfach mit handelsüblichen Spektrometern nachweisen. Dies erleichtert dem Hersteller des Originalproduktes die Wiedererkennung seines Produktes und vereinfacht bei möglichen Schadensfällen eine eindeutige Zuordnung im Sinne der Produkthaftung. Eine Unterscheidung von transparenten Glaskeramiken verschiedener Hersteller ist nur über aufwendige analytische Messmethoden möglich, wie sie nur in wenigen Speziallabors bereitstehen. Sie kann z.B. unterbleiben, wenn das untersuchte Produkt kein Nd enthält.

Anhand der Beispiele 1 bis 21 wird die Erfindung weiter verdeutlicht. Die Beispiele 1 bis 18 sind tabellarisch zusammengefasst.

Tabelle 1 enthält die Zusammensetzung von 9 Gläsern, Glas 1 ist ein Vergleichsbeispiel mit einer Zusammensetzung gemäß DE 100 17 701 C2.

Tabelle 2 enthält die physikalischen Daten der Gläser aus Tabelle 1.

Tabelle 3 zeigt die physikalischen Daten der in Glaskeramik umgewandelten Gläser mit den Zusammensetzungen gemäß Tabelle 1 sowie die Umwandlungsparameter.

Die Ausgangsgläser von Tabelle 1 wurden unter Verwendung von in der Glasindustrie üblichen Rohstoffen geschmolzen und geläutert. Durch die Wahl der Rohstoffe liegt der $Fe_2O_3$-Gehalt der Versuchsschmelzen bei 70-160 ppm (Tabelle 1). Die Gläser Nr. 2, 3 und 4 aus Tabelle 1 wurden in einem hochfrequenz beheizten 4l-Tiegel aus gesintertem Kieselglas bei Temperaturen um 1750°C eingeschmolzen. Nachdem das Gemenge aufgeschmolzen war, wurde bei 1900 bis 2000°C eine Stunde geläutert. Durch diese Hochtemperaturläuterung wurden nahezu blasenfreie Gusstücke erhalten. Der Wassergehalt der Gläser 1-8 (Tabelle 1) liegt bei ca. 0,041 mol/l entsprechend einem $\beta_{OH}$ von ca. 0,45 mm. Bei dem Glas Nr. 9 mit Chlorid-Läutermittelzusatz liegt der Wassergehalt erfahrungsgemäß niedriger bei 0,034 mol/l entsprechend $\beta_{OH}$ von 0,37 $mm^{-1}$.

Aus diesen Gusstücken wurden Versuche zum Aufgießen in eine kommerzielle Floatanlage für das Floaten von Spezialgläsern vorbereitet. Dabei wurden die Gusstücke in einem 2l-Tiegel aus Pt/Rh mit Kieselglasinnentiegel wieder aufgeschmolzen. Diese Tiegel wurden am vorderen Ende einer Halteapparatur mit einem langen Stab befestigt. Die Halteapparatur mit dem Tiegel wurde über kleine Öffnungen in die Floatanlage eingeführt. Die im Tiegel befindliche Schmelze wurde am Anfang der Floatanlage hinter der spout-lip auf das flüssige Zinn aufgegossen und während des Glattfließens an das Produktionsband, bestehend aus Borosilikatglas angeheftet. Die Verweilzeit des ausgegossenen Glases auf dem Floatbad betrug ca. 30 bis 40 Minuten. Zusammen mit dem Produktionsband aus Borosilikatglas wurden die Versuchsschmelzen durch die Versuchsanlage und durch den Kühlofen transportiert. Hinter dem Kühlofen konnten die erstarrten Versuchsschmelzen mit ca. 4 bis 6 mm Dicke vom Produktionsband abgeschnitten und für Untersuchungen entfernt werden. Bedingt durch die sehr ähnlichen Ausdehnungskoeffizienten von Borosilikatglas und den erfindungsgemäßen Zusammensetzungen blieben die Versuchsschmelzen auch während dem Abkühlen sehr gut haften, ohne dass, bedingt durch Spannungen aufgrund der unterschiedlichen Ausdehnungskoeffizienten, die Versuchsschmelzen im Kühlofen vom Produktionsband abbrachen.

Durch die Vermeidung des Pt/Rh-Kontaktes bei der Glasschmelze beträgt der Pt-Gehalt 10-30 ppb, der Rh-Gehalt liegt unter der Nachweisgrenze 10 ppb. Aus diesen gefloateten Versuchsschmelzen wurden die Prüfmuster, z.B. Stäbe für die Messung des thermischen Ausdehnungskoeffizienten, sowie Platten für Transmissionsmessungen herauspräpariert. Ferner wurden die gefloateten Versuchsschmelzen an Ober- und Unterseite auf Glasfehler, insbesondere Kristalle untersucht. Die Oberseite der gefloateten Versuchsschmelzen sind frei von Kristallen. Nur in seltenen Fällen, wenn von der Decke oder von der Seite des Floatbades Substanzen, wie z.B. Fasermaterialien oder Kondensate auf die Glasschmelze auftreten, können sich im Kontakt Kristalle bilden. An der Unterseite der gefloateten Versuchsschmelzen finden sich vereinzelte, aber visuell nicht störende Kristalle. Die Entstehung dieser Kristalle wird auf den Eintrag geringer Mengen von Luftsauerstoff in das Floatbad bei dem versuchsbedingten Öffnen der Floatanlage zurückgeführt. Der unter Versuchsbedingungen eingetragene Luftsauerstoff kann das Sn lokal oxidieren, wodurch es dann in das Glas eindiffundiert und als Keimbildner wirkt, der lokal Hochquarz-Mischkristalle erzeugt. Die Vorspannbarkeit des Glases und die Umwandlung in die Glaskeramik, sowie die damit verbundenen Einsatzbestimmungen werden durch die vereinzelnden Unterseitenkristalle nicht beeinträchtigt.

Ausscheidungen von Pt und insbesondere Rh mit den damit verbundenen Glasfehlern, wie z.B. den sehr schädlichen Kristallbändern, werden bei den Versuchsschmelzen mit den erfindungsgemäßen Gläsern nicht gefunden. Auch Sn-Tropfen an der Oberseite der gefloateten Versuchsschmelzen treten nicht auf. Durch die erfindungsgemäßen Zusätze von Nd treten bei den gefloateten Versuchsschmelzen mit erfindungsgemäßen Gläsern keine damit verbundenen Glasfehler an der Ober- und Unterseite auf. Auch bekannte Glasfehler, die mit anderen Glaskomponenten verbunden sind, werden durch die Zusätze nicht verstärkt. Damit ist ersichtlich, dass sich die erfindungsgemäßen Zusätze auch für die Herstellung von Gläsern nach dem Floatprozess eignen. Bei der Umwandlung in die erfindungsgemäßen Glaskeramiken werden keine, für die Eigenschaften oder die Nachverarbeitungsprozesses störenden Defekte beobachtet.

Die restlichen erfindungsgemäßen Gläser 5 bis 9 und das Vergleichsglas 1 aus Tabelle 1 wurden bei konventionellen Temperaturen von ca. 1620°C geschmolzen und geläutert. Das Glas 9 wurde mit einer $SnO_2$/Cl-Mischläuterung geschmolzen. Bei der Einwaage des Gemenges wurde 0,53 Gew.% Cl als $BaCl_2$ eingesetzt. Gemäß Analyse verbleiben in der erhaltenen Glaszusammenfassung 0,1 Gew.% Cl substitutiv für O. Nach dem Schmelzen in Tiegeln aus gesintertem Kieselglas wurden die Schmelzen in Pt/Rh-Tiegel mit Innentiegel aus Kieselglas umgegossen und bei Temperaturen von 1560°C, 30 Minuten durch Rühren homogenisiert. Nach Abstehen bei 1640°C, 2 Stunden, wurden Gussstücke von ca. 140x100x30 mm Größe gegossen und in einem Kühlofen, beginnend ab ca. 670°C auf Raumtemperatur abgekühlt. Aus den Gussstücken wurden die Prüfmuster für die Messung der Eigenschaften im glasigen Zustand und die Muster für die Keramisierung herauspräpariert. Transmissionsmessungen wurden an Platten von 4 mm Dicke durchgeführt. Die erfindungsgemäßen Gläser und die daraus hergestellten Gläser und Glaskeramiken belegen die vorteilhafte Wirkung des Einsatzes von Nd und optional zusätzlich Co zur Verringerung der störenden Eigenfarbe (Tabelle 2 und 3).

Beispiel 20 zeigt die Transmissionsspektren der Ausgangsgläser (Beispiel 1, 2) für 4 mm Dicke. Dabei sind bei dem erfindungsgemäßen Beispiel 2 der charakteristischen Absorptionsbanden des Nd-Ions zu erkennen, die sich hervorragend zur Markierung und zum Recycling der erfindungsgemäßen gefloateten Flachgläser eignen.

Auch das Vergleichsglas 1 entspricht den Forderungen, die bezüglich der Floatbarkeit gestellt werden. Nach dem Keramisieren in eine transparente Glaskeramik mit Hochquarz-Mischkristallen als Hauptkristallphase zeigt das Vergleichsbeispiel 10 (Tabelle 3) jedoch eine sehr störende Gelbfärbung mit einem Yellowness-Index von 21,7%. Diese Färbung wird insbesondere auf den Sn/Ti-Farbkomplex zurückgeführt. Beispiel 21 zeigt das dazugehörige Transmissionsspektrum einer 4 mm dicken Probe. Bei Glas Nr. 2 in Tabelle 1 wird eine Überfärbung mit erfindungsgemäßem Zusatz von 0,28 Gew.% $Nd_2O_3$ vorgenommen. Nach Keramisierung in die erfindungsgemäße farbarme, transparente Glaskeramik (Beispiel 11) ist die störende Färbung verschwunden und es tritt ein neutraler Grauton des Glases auf, der bei weitem nicht so auffällig und störend ist. Das Transmissionsspektrum ist ebenfalls in Beispiel 21 ersichtlich. Es zeigen sich die charakteristischen Absorptionsbanden des Nd-Ions, die sich zur Markierung und zum Recycling der Glaskeramiken eignen.

Das Glas Nr. 8 aus Tabelle 1 wurde bezüglich seines Entglasungsverhaltens gemessen. Bei der Messung der oberen Entglasungsgrenze (OEG) wurde das Glas in Pt/Rh-Tiegeln aufgeschmolzen. Anschließend wurden die Tiegel für 5 Stunden bei verschiedenen Temperaturen im Bereich der Verarbeitungstemperatur gehalten. Die oberste Temperatur, bei der die ersten Kristalle im Kontakt zum Platin/Rhodium oder in Volumen auftreten, bestimmt die OEG. Wie gewünscht, liegt die obere Entglasungsgrenze mit 1280°C unterhalb der Verarbeitungstemperatur $V_A$ (1308°C) des Glases. Bei der Entglasungstemperatur OEG treten als Kristallphase Mullit und Baddeleyit auf.

Die Umwandlung in die transparente Glaskeramik erfolgte bei den in Tabelle 3 aufgeführten Keimbildungs- und Kristallisationstemperaturen. Nach schnellem Aufheizen auf 600°C wird das Aufheizen auf die Keimbildungstemperatur mit einer Heizrate von 4 K/min und die weitere Erhöhung von der Keimbildungstemperatur auf Kristallisationstemperatur mit einer Heizrate von 2,5 K/min durchgeführt. Die Abkühlung von der Maximaltemperatur erfolgte bis zu 600°C mit einer Abkühlrate von ca. 4 K/min, anschließend durch Abschalten der Ofenheizung. Das Beispiel 12 zeigt eine Glaskeramik, die durch eine Maximaltemperatur 1100°C, 20 min in eine weiße transluzente Glaskeramik mit Keatit-Mischkristallen als vorherrschende Kristallphase umgewandelt wurde. Die Hauptkristallphase und deren Phasenanteil in der Glaskeramik wurden mittels Röntgenbeugungsdiffraktometrie bestimmt. Die Transmissionsmessungen wurden mit Normlicht C und einem Betrachtungswinkel 2° an Proben mit 4 mm Dicke vorgenommen.

Beispiel 19

Das Glas 2 aus Tabelle 1 wurde durch Ionenaustausch in einem Salzbad aus Natriumnitrat bei 450°C, 22 Stunden chemisch vorgespannt. Die Dicke der Druckspannungsschicht wird an 1 mm dicken, vor dem Vorspannen polierten Proben spannungsoptisch gemessen. Die gemessene Oberflächendruckspannung betrug 7900 nm/cm, im Glasinnern beträgt die Zugspannung 100 nm/cm. Die Dicke der Druckspannungszone an der Oberfläche beträgt 320 μm. Durch die vergleichsweise hohen Werte der Druckspannung und die hervorragenden Dicken der Druckspannungsschicht an der Oberfläche der erfindungsgemäßen Flachgläser zeigt sich die gute chemische Vorspannbarkeit.

Beispiel 20 zeigt eine Gegenüberstellung der Transmissionsspektra von Glas 1 und Glas 2.

Beispiel 21 zeigt eine Gegenüberstellung der Transmissionsspektra der aus Glas 1 erzeugten Glaskeramik und der aus Glas 2 erzeugten Glaskeramik.

Tabelle 1: Zusammensetzungen gefloateter erfindungsgemäßer Gläser und Vergleichsglas 1

| Glas Nr. | 1 | 2 | 3 | 4 | 5 | 6 | 7 | 8 | 9 |
|---|---|---|---|---|---|---|---|---|---|
| Zusammensetzung (Gew%) auf Oxidbasis: | | | | | | | | | |
| $Li_2O$ | 4,07 | 4,10 | 4,03 | 4,00 | 4,09 | 4,09 | 4,09 | 4,10 | 3,81 |
| $Na_2O$ | 0,56 | 0,56 | 2,00 | 0,30 | 0,57 | 0,57 | 0,57 | 0,57 | 0,35 |
| $K_2O$ | 0,22 | 0,22 | 0,22 | | 0,22 | 0,22 | 0,22 | 0,22 | |
| $\Sigma Na_2O+K_2O$ | 0,78 | 0,78 | 2,22 | 0,30 | 0,79 | 0,79 | 0,79 | 0,79 | 0,33 |
| MgO | 1,18 | 1,19 | 1,17 | 1,02 | 1,19 | 1,19 | 1,19 | 1,20 | 0,87 |
| CaO | | | | | | | | | 0,22 |
| SrO | | | | | | | | | 0,3 |

(fortgesetzt)

| Glas Nr. | 1 | 2 | 3 | 4 | 5 | 6 | 7 | 8 | 9 |
|---|---|---|---|---|---|---|---|---|---|
| Zusammensetzung (Gew%) auf Oxidbasis: | | | | | | | | | |
| BaO | | | | | | | | | 1,55 |
| ZnO | 1,00 | | 0,30 | 0,46 | 0,30 | 0,30 | 0,30 | 0,30 | 0 |
| $Al_2O_3$ | 22,69 | 22,85 | 22,45 | 22,61 | 22,83 | 22,80 | 22,78 | 22,85 | 22,5 |
| $SiO_2$ | 64,50 | 64,96 | 63,82 | 66,13 | 64,89 | 64,82 | 64,74 | 64,95 | 65,9 |
| $TiO_2$ | 2,14 | 2,16 | 2,12 | 1,50 | 2,15 | 2,15 | 2,15 | 2,15 | 2,05 |
| $ZrO_2$ | 1,89 | 1,90 | 1,86 | 1,96 | 1,90 | 1,90 | 1,90 | 1,90 | 2,0 |
| $SnO_2$ | 0,45 | 0,45 | 0,44 | 0,44 | 0,45 | 0,45 | 0,45 | 0,25 | 0,20 |
| $\Sigma TiO_2 + ZrO_2 + SnO_2$ | 4,48 | 4,51 | 4,42 | 3,90 | 4,50 | 4,50 | 4,50 | 4,30 | 4,25 |
| $P_2O_5$ | 1,30 | 1,31 | 1,29 | 1,33 | 1,31 | 1,31 | 1,31 | 1,31 | 0 |
| $Nd_2O_3$ | | 0,30 | 0,30 | 0,25 | 0,10 | 0,20 | 0,30 | 0,20 | 0,15 |
| CoO | | | | | | | | 0,0012 | 0,0011 |
| $Fe_2O_3$ (ppm) | - | - | 160 | 70 | 160 | 160 | 160 | 150 | 90 |

Tabelle 2: Eigenschaften gefloateter erfindungsgemäßer Gläser und Vergleichsglas 1

| Beispiel Nr. | 1 | 2 | 3 | 4 | 5 | 6 | 7 | 8 | 9 |
|---|---|---|---|---|---|---|---|---|---|
| **Glas Nr.** | 1 | 2 | 3 | 4 | 5 | 6 | 7 | 8 | 9 |
| **Eigenschaften glasig:** | | | | | | | | | |
| Tg(°C) | 682 | 694 | 671 | 707 | 691 | 689 | 690 | 689 | 710 |
| VA (°C) | 1299 | 1299 | 1297 | 1333 | 1303 | 1301 | 1305 | 1308 | 1314 |
| $\alpha$20/300 ($10^{-6}$/K) | 4,17 | 4,17 | 4,83 | 3,91 | 4,19 | 4,18 | 4,13 | 4,18 | 4,09 |
| | | | | | | | | | |
| | | | | | | | | | |
| Transmission bei 4mm Dicke Normlichtart C, 2° | | | | | | | | | |
| Gesamtlichttransmission Y[%] | 90,4 | 84,8 | 85,0 | 86,1 | 88,9 | 86,9 | 85,3 | 86,0 | 86,9 |
| Farbort CIE-System        x | 0,3128 | 0,3068 | 0,3072 | 0,3060 | 0,3106 | 0,3087 | 0,3068 | 0,3074 | 0,3074 |
| y | 0,3202 | 0,3136 | 0,3143 | 0,3121 | 0,3177 | 0,3157 | 0,3136 | 0,3142 | 0,3138 |
| Farbort Lab-System        L* | 96,0 | 93,7 | 93,8 | 94,4 | 95,4 | 94,6 | 93,9 | 94,2 | 94,7 |
| a* | -0,6 | -0,4 | -0,5 | 0 | -0,5 | -0,5 | -0,4 | -0,4 | -0,2 |
| b* | 2,0 | -1,5 | -1,2 | -2,2 | 0,7 | -0,4 | -1,5 | -1,2 | -1,3 |
| Buntheit        c* | 2,1 | 1,6 | 1,3 | 2,2 | 0,9 | 0,6 | 1,6 | 1,2 | 1,4 |

Tabelle 3: Umwandlungsbedingungen und Eigenschaften der aus den Gläsern gemäß Tabelle 1 umgewandelten Glaskeramiken (Glas 1 = Vergleichsglas)

| Beispiel Nr. | 10 | 11 | 12 | 13 | 14 | 15 | 16 | 17 | 18 |
|---|---|---|---|---|---|---|---|---|---|
| Glas Nr. | 1 | 2 | 2 | 4 | 5 | 6 | 7 | 8 | 9 |
| Umwandlungsbedingungen: | | | | | | | | | |
| Keimbildung    T(°C)<br>t (min) | 740<br>60 | 740<br>60 | 755<br>60 | 740<br>60 | 740<br>60 | 740<br>60 | 740<br>60 | 740<br>60 | 740<br>60 |
| Kristallisation    T (°C) | 900 | 900 | | 900 | 900 | 900 | 900 | 900 | 900 |
| t (min) | 15 | 15 | | 15 | 15 | 15 | 15 | 15 | 15 |
| Umwandlung in Keatit T(°C) | | | 1100 | | | | | | |
| t (min) | | | 7 | | | | | | |
| Eigenschaften: | | | | | | | | | |
| Hauptkristallphase | HQ | HQ | KMK | HQ | HQ | HQ | HQ | Ha | HQ |
| Phasenanteil (Gew%) | 77 | 72 | 91 | 77 | 72 | 73 | 72 | 73 | 71 |
| $\alpha 20/700\text{-}10^{-6}$/K | 0,12 | 0,27 | 1,43 | -0,35 | 0,23 | 0,22 | 0,25 | 0,20 | 0,19 |
| IR Transmission 1600 nm (%) | 87,8 | 82,5 | 82,5 | 89,4 | 88,6 | 88,2 | 88,1 | 87,7 | 88,9 |
| Transmission bei 4mm Dicke, | | | | | | | | | |
| Normlichtart C, 2° | | | | | | | | | |
| Gesamtlichttransmission Y% | 84,2 | 79,1 | 3,9 | 82,3 | 83,9 | 81,5 | 80,3 | 79,6 | 81,9 |
| Farbort    x | 0,3290 | 0,3164 | | 0,3146 | 0,3202 | 0,3183 | 0,3155 | 0,3151 | 0,3118 |
| y | 0,3442 | 0,3272 | | 0,3245 | 0,3310 | 0,3291 | 0,3257 | 0,3208 | 0,3160 |
| L* | 92,6 | 90,8 | | 92,3 | 92,9 | 91,9 | 91,4 | 91,5 | 92,8 |
| a* | -4,0 | -2,1 | | -1,8 | -2,1 | -2,1 | -1,9 | 0,2 | 1,0 |
| b* | 13,3 | 5,0 | | 3,8 | 7,1 | 6,0 | 4,3 | 2,5 | 0,2 |
| Buntheit    c* | 13,9 | 5,4 | | 4,2 | 7,4 | 6,4 | 4,7 | 2,5 | 1,0 |

(fortgesetzt)

| Beispiel Nr. | 10 | 11 | 12 | 13 | 14 | 15 | 16 | 17 | 18 |
|---|---|---|---|---|---|---|---|---|---|
| **Glas Nr.** | 1 | 2 | 2 | 4 | 5 | 6 | 7 | 8 | 9 |
| **Umwandlungsbedingungen:** | | | | | | | | | |
| Yellowness Index     % | 21,7 | 8,3 | | 6,2 | 12,2 | 10,3 | 7,2 | 5,4 | 1,4 |
| Kristallphasen:<br>HQ = Hochquarz-Mischkristall<br>KMK = Keatit-Mischkristall | | | | | | | | | |

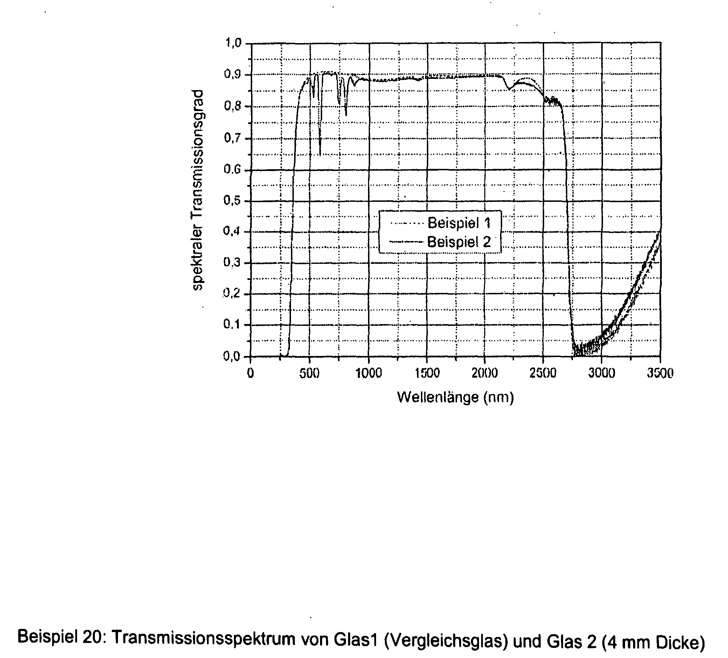

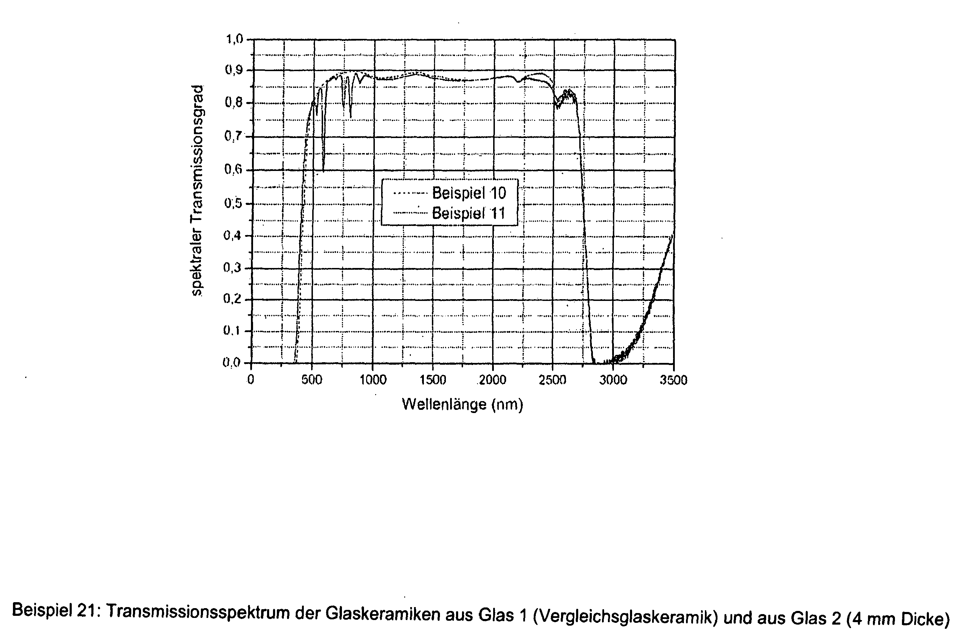

**Patentansprüche**

1. Optisch detektierbares floatbares arsen- und antimonfreies, keramisierbares Lithium-Aluminosilikat-Glas, das vorspannbar ist, und die daraus umgewandelte Glaskeramik mit einer Zusammensetzung von im Wesentlichen (in Gew.-% auf Oxidbasis):

| | |
|---|---|
| $SiO_2$ | 55-69 |
| $Al_2O_3$ | 19-25 |
| $Li_2O$ | 3,2-5 |
| $Na_2O$ | 0-1,5 |
| $K_2O$ | 0-1,5 |
| MgO | . 0-2,2 |
| CaO | 0-2,0 |
| SrO | 0-2,0 |
| BaO | 0-2,5 |
| ZnO | 0-< 1,5 |
| $TiO_2$ | 1-3 |
| $ZrO_2$ | 1-2,5 |
| $SnO_2$ | 0,1-<1 |
| $\Sigma TiO_2+ZrO_2+SnO_2$ | 2,5-5 |
| $P_2O_5$ | 0-3 |
| $Nd_2O_3$ | 0,01-0,6 |
| CoO | 0-0,005 |
| F | 0-1 |
| $B_2O_3$ | 0-2 |

2. Glas und Glaskeramik nach Anspruch 1,
**dadurch gekennzeichnet,**
**dass** die Summe aus $Na_2O+K_2O$ 0,1-2 Gew.-% beträgt.

3. Glas und Glaskeramik nach den Ansprüchen 1 oder 2,
**dadurch gekennzeichnet,**
**dass** die Summe aus $3,2 \cdot ZnO+TiO_2$ maximal 4,3 Gew.-% beträgt.

4. Glas oder Glaskeramik nach wenigstens einem der Ansprüche 1 bis 3 mit einer Zusammensetzung von im Wesentlichen (in Gew.% auf Oxidbasis):

| | |
|---|---|
| $SiO_2$ | 60-68 |
| $Al_2O_3$ | 19-24 |
| $Li_2O$ | 3,5-4,5 |
| $Na_2O$ | 0,2 -1 |
| $K_2O$ | 0-0,8 |
| $\Sigma Na_2O+K_2O$ | 0,4-1,5 |
| MgO | 0,1-2 |
| CaO | 0-1 |
| SrO | 0-1 |
| BaO | 0-2,5 |
| ZnO | 0-1 |
| $TiO_2$ | 1-2,6 |
| $ZrO_2$ | 1,2-2,2 |
| $SnO_2$ | 0,2-0,6 |
| $\Sigma TiO_2+ZrO_2+SnO_2$ | 3-4,5 |

(fortgesetzt)

| | |
|---|---|
| $P_2O_5$ | 0-2 |
| $Nd_2O_3$ | 0,025-0,46 |
| CoO | 0-0,003 |

5. Glas oder Glaskeramik nach einem oder mehreren der Ansprüche 1-4,
**dadurch gekennzeichnet**
**dass** die Summe aus $Li_2O+Na_2O$ mindestens 3,7 Gew.-% beträgt.

6. Glas und Glaskeramik nach einem oder mehreren der Ansprüche 1-5 enthaltend in Gew.-%
weniger als 2,3 $TiO_2$
weniger als 0,4 $Nd_2O_3$
weniger als 0,003 CoO
und als Verunreinigung weniger als 0,025 $Fe_2O_3$.

7. Glas und Glaskeramik nach einem oder mehreren der Ansprüche 1-6,
**dadurch gekennzeichnet,**
**dass** es oder sie frei ist von BaO.

8. Glas und Glaskeramik nach einem oder mehreren der Ansprüche 1 bis 7,
**gekennzeichnet durch**
einen Gehalt von weniger als 300 ppb Pt und weniger als 30 ppb Rh.

9. Glas und Glaskeramik nach einem oder mehreren der Ansprüche 1-8,
**gekennzeichnet durch**
einen Gehalt von 100 bis 3000 ppm $Nd_2O_3$.

**Claims**

1. Optically detectable, floatable, arsenic- and antimony-free, ceramizable lithium-aluminosilicate glass, which can be toughened, and the glass-ceramic transformed from said glass, having a composition of substantially (in % by weight, based on oxide):

| | |
|---|---|
| $SiO_2$ | 55-69 |
| $Al_2O_3$ | 19-25 |
| $Li_2O$ | 3.2-5 |
| $Na_2O$ | 0-1.5 |
| $K_2O$ | 0-1.5 |
| MgO | 0-2.2 |
| CaO | 0-2.0 |
| SrO | 0-2.0 |
| BaO | 0-2.5 |
| ZnO | 0- < 1.5 |
| $TiO_2$ | 1-3 |
| $ZrO_2$ | 1-2.5 |
| $SnO_2$ | 0.1- < 1 |
| $\Sigma TiO_2+ZrO_2+SnO_2$ | 2.5-5 |
| $P_2O_5$ | 0-3 |
| $Nd_2O_3$ | 0.01-0.6 |
| CoO | 0-0.005 |
| F | 0-1 |
| $B_2O_3$ | 0-2 |

**2.** Glass and glass-ceramic according to Claim 1, **characterized in that** the sum of $Na_2O+K_2O$ amounts to 0.1-2% by weight.

**3.** Glass and glass-ceramic according to Claim 1 or 2, **characterized in that** the sum of $3.2 \cdot ZnO+TiO_2$ amounts to at most 4.3% by weight.

**4.** Glass or glass-ceramic according to at least one of Claims 1 to 3, having a composition of substantially (in % by weight, based on oxide):

| | |
|---|---|
| $SiO_2$ | 60-68 |
| $Al_2O_3$ | 19-24 |
| $Li_2O$ | 3.5-4.5 |
| $Na_2O$ | 0.2-1 |
| $K_2O$ | 0-0.8 |
| $\Sigma Na_2O+K_2O$ | 0.4-1.5 |
| $MgO$ | 0.1-2 |
| $CaO$ | 0-1 |
| $SrO$ | 0-1 |
| $BaO$ | 0-2.5 |
| $ZnO$ | 0-1 |
| $TiO_2$ | 1-2.6 |
| $ZrO_2$ | 1.2-2.2 |
| $SnO_2$ | 0.2-0.6 |
| $\Sigma TiO_2+ZrO_2+SnO_2$ | 3-4.5 |
| $P_2O_5$ | 0-2 |
| $Nd_2O_3$ | 0.025-0.46 |
| $CoO$ | 0-0.003 |

**5.** Glass or glass-ceramic according to one or more of Claims 1-4, **characterized in that** the sum of $Li_2O+Na_2O$ amounts to at least 3.7% by weight.

**6.** Glass and glass-ceramic according to one or more of Claims 1-5, containing in % by weight
less than 2.3 $TiO_2$
less than 0,4 $Nd_2O_3$
less than 0.003 $CoO$
and as impurity less than 0.025 $Fe_2O_3$.

**7.** Glass and glass-ceramic according to one or more of Claims 1-6, **characterized in that** it is free of BaO.

**8.** Glass and glass-ceramic according to one or more of Claims 1 to 7, **characterized by** a Pt content of less than 300 ppb and an Rh content of less than 30 ppb.

**9.** Glass and glass-ceramic according to one or more of Claims 1-8, **characterized by** an $Nd_2O_3$ content of 100 to 3000 ppm.

**Revendications**

**1.** Verre céramisable en silicate de lithium-aluminium, exempt d'arsenic et d'antimoine, optiquement détectable, pouvant être élaboré sous forme de verre flotté et pouvant être trempé, ainsi que la vitrocéramique transformée à partir de celui-ci, et dont la composition comprend sensiblement les composés suivants (en % en poids sur une base d'oxyde) :

| | |
|---|---|
| SiO$_2$ | 55 à 69 |
| Al$_2$O$_3$ | 19 à 25 |
| Li$_2$O | 3,2 à 5 |
| Na$_2$O | 0 à 1, 5 |
| K$_2$O | 0 à 1, 5 |
| MgO | 0 à 2,2 |
| CaO | 0 à 2,0 |
| SrO | 0 à 2,0 |
| BaO | 0 à 2,5 |
| ZnO | 0 à < 1,5 |
| TiO$_2$ | 1 à 3 |
| ZrO$_2$ | 1 à 2, 5 |
| SnO$_2$ | 0, 1 à < 1 |
| Σ TiO$_2$ + ZrO$_2$ + SnO$_2$ | 2,5 à 5 |
| P$_2$O$_5$ | 0 à 3 |
| Nd$_2$O$_3$ | 0,01 à 0,6 |
| CoO | 0 à 0,005 |
| F | 0 à 1 |
| B$_2$O$_3$ | 0 à 2 |

**2.** Verre et vitrocéramique selon la revendication 1, **caractérisés en ce que** la somme des oxydes Na$_2$O + K$_2$O vaut 0,1 à 2 % en poids.

**3.** Verre et vitrocéramique selon les revendications 1 ou 2, **caractérisés en ce que** la somme des oxydes 3,2·ZnO + TiO$_2$ représente au maximum 4,3 % en poids.

**4.** Verre ou vitrocéramique selon au moins l'une quelconque des revendications 1 à 3, dont la composition comprend sensiblement (en % en poids sur une base d'oxyde) :

| | |
|---|---|
| SiO$_2$ | 60 à 68 |
| Al$_2$O$_3$ | 19 à 24 |
| Li$_2$O | 3, 5 à 4, 5 |
| Na$_2$O | 0, 2 à 1 |
| K$_2$O | 0 à 0, 8 |
| Σ Na$_2$O + K$_2$O | 0, 4 à 1,5 |
| MgO | 0,1 à 2 |
| CaO | 0 à 1 |
| SrO | 0 à 1 |
| BaO | 0 à 2,5 |
| ZnO | 0 à 1 |
| TiO$_2$ | 1 à 2,6 |
| ZrO$_2$ | 1,2 à 2,2 |
| SnO$_2$ | 0,2 à 0, 6 |
| Σ TiO$_2$ + ZrO$_2$+ SnO$_2$ | 3 à 4,5 |
| P$_2$O$_5$ | 0 à 2 |
| Nd$_2$O$_3$ | 0, 025 à 0, 46 |
| CoO | 0 à 0,003 |

**5.** Verre ou vitrocéramique selon l'une ou plusieurs des revendications 1 à 4, **caractérisé**(e) en ce que la somme des oxydes Li$_2$O + Na$_2$O représente au moins 3,7 % en poids.

**6.** Verre et vitrocéramique selon l'une ou plusieurs des revendications 1 à 5, contenant en % en poids :

une quantité de $TiO_2$ inférieure à 2,3
une quantité de $Nd_2O_3$ inférieure à 0,4
une quantité de CoO inférieure à 0,003
et, comme impuretés, une quantité de $Fe_2O_3$ inférieure à 0,025.

**7.** Verre et vitrocéramique selon l'une ou plusieurs des revendications 1 à 6, **caractérisés en ce que** l'un ou l'autre est exempt de BaO.

**8.** Verre et vitrocéramique selon l'une ou plusieurs des revendications 1 à 7, **caractérisés par** une teneur en Pt inférieure à 300 ppb et par une teneur en Rh inférieure à 30 ppb.

**9.** Verre et vitrocéramique selon l'une ou plusieurs des revendications 1 à 8, **caractérisés par** une teneur en $Nd_2O_3$ de 100 à 3000 ppm.

Beispiel 20: Transmissionsspektrum von Glas1 (Vergleichsglas) und Glas 2 (4 mm Dicke)

Beispiel 21: Transmissionsspektrum der Glaskeramiken aus Glas 1 (Vergleichsglaskeramik) und aus Glas 2 (4 mm Dicke)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1001701 C2
- US 6846760 B2
- DE 10017701 C2
- US 6846760 B
- US 4093468 A